# EUROPÄISCHE PATENTSCHRIFT

(11) **EP 0 719 975 B1**
(45) Veröffentlichungstag und Bekanntmachung des Hinweises auf die Patenterteilung: **27.03.2002**
(21) Anmeldenummer: 95119761.5
(22) Anmeldetag: 14.12.1995
(51) Int. Cl.: F16L 55/033

(54) **Vorrichtung zur Schalldämmung am Ende von Rohrleitungen**
Sound dampening device at the end of conduits
Dispositif d'amortissement de son à la fin de tuyauteries

(30) Priorität: 27.12.1994 DE 4446872
(43) Veröffentlichungstag der Anmeldung: 03.07.1996
(73) Patentinhaber: BAYER AG, 51368 Leverkusen (DE)
(72) Erfinder: Fischer, Andreas, D-41542 Dormagen (DE); Strassen, Werner, Dipl.-Ing., D-40882 Ratingen (DE); Brauer, Erwin, D-51375 Leverkusen (DE)

(56) Entgegenhaltungen:
- EP-A- 0 563 706
- WO-A-89/08215
- DR.RER.NAT. HELMUT SCHMIDT 'Schalltechnisches Taschenbuch' 1989 , VDI-VERLAG GMBH , DÜSSELDORF (DE) * Seite 211, Zeile 6 - Zeile 14 *

## Beschreibung

Die Erfindung geht aus von einer Vorrichtung zur Schalldämmung an Rohrleitungen mit einer schallabstrahlenden Austrittsöffnung am Rohrende. Die Vorrichtung besteht prinzipiell aus einem auf die Hauptwellenlänge λ der Schallquelle abgestimmten Pfeifenresonator in Form einer Abdeckkappe mit einer oder mehreren Seitenwänden und mindestens einer Stirnwand, wobei die Abdeckkappe mittels einer Halterung am Rohrleitungsende derart befestigt ist, daß der Abstand zwischen der schallabstrahlenden Austrittsöffnung und der Stirnwand ca. λ/4 oder ein ungeradzahliges Vielfaches von λ/4 beträgt.

In der Literatur werden verschiedene Typen von Resonanzschalldämpfern zur Reduzierung der Schallemission beschrieben (siehe z. B. H. Schmidt; Schalltechnisches Taschenbuch; 4. Auflage 1989). Ein spezieller Resonatortyp ist der sogenannte Pfeifenresonator, dessen Wirkungsweise auf einer Interferenz zwischen der ankommenden Schallwelle in einer Rohrleitung und einer reflektierten Schallwelle beruht (siehe z. B. Maschinenmarkt; Würzburg 87 (1981): 77). Die Reflektion findet dabei in einer an die Rohrleitung angekoppelten Resonatorkammer statt. In einer unendlich langen Rohrleitung breiten sich Schallwellen unterhalb der Grenzfrequenz des Kanals, die durch deren geometrische Querabmessungen gegeben sind, als fortschreitende, ebene Welle aus. Tritt im Kanal eine Diskontinuität, z. B. ein plötzlicher Querschnittssprung, Stichleitung usw. auf, so wird die auftreffende Schallwelle infolge der Impedanzänderung teilweise oder völlig reflektiert. Es tritt eine Schalldämmung auf, wie sie z. B. an einer Wand vorhanden ist.

Das Problem der Reduzierung bei schallabstrahlenden Austrittsöffnungen stellt sich in der Industrie bei lärmerzeugenden Maschinen, die mit Kühlluft- oder Abluftleitungen versehen sind, wobei sich die schallabstrahlenden Austrittsöffnungen in der Regel außerhalb des geschlossenen Gebäudes befinden und in der Nähe befindliche Siedlungen durch den auftretenden Lärm gestört werden.

Bisher sind kaum praktikable technische Lösungen bekannt, die mit geringem apparativen Aufwand ohne Betriebsstillstand zu realisieren sind und auch von weniger gut geschultem Personal berechnet, angeliefert und montiert werden können.

Die US-Patentschriften 2,043,030 und 2,075,265 beschreiben eine Vielzahl von Pfeifenresonatoren. Bei den dort aufgeführten Schalldämpfern ist der konstruktive Aufwand sehr hoch (US 2,075,265), so daß diese in der Auslegung nur sehr schwierig zu berechnen sind. Die in der US-Patentschrift 2,075,265 beschriebenen Schalldämpfer können zudem nicht nachjustiert werden. Dies hat zur Folge, daß Auslegungsfehler Fehlfunktionen zur Folge haben, die nur mit erhöhtem Aufwand nachgebessert werden können. Gemäß US 2,043,030 wird dieses Problem zum Teil gelöst, in dem die Schalldämpfer durch Verschieben in Längsrichtung nachjustiert werden können. Bei den dort beschriebenen Schalldämpfern ist jedoch eine mechanische 180° - Umlenkung des Luftstroms für die Funktion zwingend erforderlich. Dies hat zum Nachteil, daß erhebliche Druckverluste beim Ausströmen des gasförmigen Mediums (Kühlluft, Abluft) entstehen.

Bei einer Vorrichtung zur Schalldämmung gemäß DE 4243280 ist diese mechanische 180°-Umlenkung des Luftstroms nicht mehr erforderlich. Die dort beschriebenen Schalldämpfer benötigen jedoch eine akustisch geschlossene Rückwand. Als akustisch geschlossen sind gemäß diesem Stand der Technik Materialien mit einem Strömungswiderstand von mehr als 500 kNs/m⁴ (z.B. Stahlblech, Mauerwerk, Folien, Glas etc.) anzusehen. Aufgrund der zwingend erforderlichen akustisch geschlossenen Rückwand mit einem längenspezifischen Strömungswiderstand > 500 kNs/m⁴ müssen wiederum erhebliche Druckverluste beim Austritt des durch die Rohrleitung strömenden gasförmigen Mediums in Kauf genommen werden. Hinzu kommt, daß zur Herstellung einer akustisch geschlossenen Rückwand mit einem längenspezifischen Strömungswiderstand > 500 kNs/m⁴ massive Materialien wie z.B. Stahlblech, Mauerwerk etc. benötigt werden, was zu einem hohen Fertigungs-, Gewichts- und Kostenaufwand führt.

Es bestand daher die Aufgabe, einen Schalldämpfer auf der Basis des eingangs beschriebenen Pfeifenresonators zu entwickeln, der niedrige Druckverluste an der Austrittsöffnung der Rohrleitung verursacht und einfach sowie preiswert herzustellen ist, bei dem aber dennoch eine einfache Berechnung und Auslegung mit der Möglichkeit der Nachjustage besteht.

Diese Aufgabe wird, ausgehend von dem eingangs beschriebenen Pfeifenresonator in Form einer Abdeckkappe mit einer oder mehreren Seitenwänden und mindestens einer Stirnwand erfindungsgemäß dadurch gelöst, dass mindestens zwei Wände der Abdeckkappe aus einem gasdurchlässigen Material mit einem längenspezifischen Strömungswiderstand von höchstens 500 kNs/m⁴ bestehen.

Eine alternative Lösung der Aufgabe besteht darin, dass in dem eingangs beschriebenen Pfeifenresonator mindestens eine Wand der Abdeckkappe aus einem gasdurchlässigen Material mit einem längenspezifischen Strömungswiderstand von höchstens 500 kNs/m⁴ besteht und dass die Abdeckkappe zwei gegenüberliegende Stirnwände aufweist und als Doppelresonator ausgebildet ist, wobei der eine Teilresonator auf die Hauptwellenlänge und der andere Teilresonator auf eine Seitenbandfrequenz abgestimmt ist.

Gegenstand der Erfindung ist eine Vorrichtung zur Schalldämmung an Rohrleitungen mit einer schallabstrahlenden Austrittsöffnung am Rohrende, bestehend aus einem auf die Hauptweltenlänge λ der Schallquelle abgestimmten Pfeifenresonator in Form einer Abdeckkappe mit einer oder mehreren Seitenwänden und mindestens einer Stirnwand, wobei die Abdeckkappe mittels einer Halterung am Rohrleitungsende derart befestigt ist, dass der Abstand zwischen der schallabstrahlenden Austrittsöffnung und der Stirnwand ca. λ/4 oder ein ungeradzahliges Vielfaches von λ/4 beträgt, dadurch gekennzeichnet, dass mindestens zwei Wände der Abdeckkappe aus einem gasdurchlässigen Material mit einem längenspezifischen Strömungswiderstand von höchstens 500 kNs/m⁴ bestehen.

Weiterer Gegenstand der Erfindung ist eine Vorrichtung zur Schalldämmung an Rohrleitungen mit einer schallabstrahlenden Austrittsöffnung am Rohrende, bestehend aus einem auf die Hauptwellenlänge λ der Schallquelle abgestimmten Pfeifenresonator in Form einer Abdeckkappe mit einer oder mehreren Seitenwänden und mindestens einer Stirnwand, wobei die Abdeckkappe mittels einer Halterung am Rohrleitungsende derart befestigt ist, dass der Abstand zwischen der schallabstrahlenden Austrittsöffnung und der Stimwand ca. λ/4 oder ein ungeradzahliges Vielfaches von λ/4 beträgt, dadurch gekennzeichnet, dass mindestens eine Wand der Abdeckkappe aus einem gasdurchlässigen Material mit einem längenspezifischen Strömungswiderstand von höchstens 500 kNs/m⁴ besteht und dass die Abdeckkappe zwei gegenüberliegende Stirnwände aufweist und als Doppelresonator ausgebildet ist, wobei der eine Teilresonator auf die Hauptwellenlänge und der andere Teilresonator auf eine Seitenbandfrequenz abgestimmt ist.

Unter "Hauptwellenlänge " oder "Hauptfrequenz" wird im Rahmen dieser Erfindung diejenige Wellenlänge bzw. Frequenz verstanden, bei der das Intensitätsmaximum des emittierten Schallspektrums oder eine als besonders störend empfundene Wellenlänge bzw. Frequenz liegt. Bei der Reduzierung der Schallabsttrahlung von Ventilatorauslässen ist z.B. die Hauptwellenlänge durch die Drehzahl und Schaufelzahl des Ventilators vorgegeben. Vorteilhaft liegt der längenspezifische Strömungswiderstand im Bereich von 10 bis 500 kNs/m⁴ und vorzugsweise zwischen 50 und 300 kNs/m⁴.

Gemäß einer bevorzugten Ausführung besteht die gasdurchlässige Wand aus einer Lochplatte mit einem Lochflächenanteil von maximal 40 %, bezogen auf die Gesamtfläche dieser Wand. In der Praxis sollte der Lochflächenanteil zweckmäßig zwischen 5 % und 30 % der Gesamtfläche der betreffenden Wand liegen. Alternativ kann die gasdurchlässige Wand auch aus einer Faserplatte mit durchgehenden Hohlräumen bestehen.

Die gasdurchlässige Stirnwand der Abdeckkappe des Pfeifenresonators wird zweckmäßig gegenüber der schallabstrahlenden Austrittsöffnung angebracht. Alternativ kann aber der Pfeifenresonator auch in der Weise angebracht werden,daß die Rohrleitung durch die gasdurchlässige Stirnwand hindurch in die Abdeckkappe hineinragt.

Eine Weiterentwicklung der Erfindung besteht darin, daß die Abdeckkappe zwei gegenüberliegende Stirnwände aufweist und als Doppelresonator ausgebildet ist, wobei der eine Teilresonator auf die Hauptwellenlänge und der andere Teilresonator auf eine Seitenbandfrequenz abgestimmt ist. Unter "Seitenbandfrequenz" wird dabei eine Frequenz verstanden, die maximal 20 % neben der zur Hauptwellenlänge λ gehörenden Schallfrequenz liegt oder (alternativ) durch ein zweites, im Schallspektrum auftretendes Emissionsmaximum vorgegeben ist.

Mit der Erfindung werden folgende Vorteile erzielt:

Bei allen Lärmquellen mit ausgeprägter Abstrahlung in einem bestimmten Frequenzbereich kann eine hochwirksame Schalldämmung (bis zu 30 dB im Einzelton) erzielt werden.

Die Vorrichtung kann vor Ort mit nur wenigen Handgriffen montiert und justiert werden; d.h. der. Pfeifenresonator kann vor Ort empirisch aufgrund der subjektiv empfundenen Schallemission abgestimmt und eingestellt werden.

Die neue Vorrichtung besteht aus nur wenigen Bauteilen, so daß der Konstruktions-, Herstellungs- und Montageaufwand vermindert ist. Die Vorrichtung ist insbesondere geeignet für eine einfache Nachrüstung bereits vorhandener Anlagen.

Ferner kann der Schalldämpfer auch ohne weiteres bei sehr hohen Strömungsgeschwindigkeiten bis > 100 m/s eingesetzt werden.

Besonders gut hat sich die Vorrichtung bei Rohrleitungsdurchmessern von ca 100 mm bis 500 mm, Frequenzbereichen von 100 Hz bis 500 Hz, Verwendung von Lochblechen mit Lochdurchmessern von 1 mm bis 5 mm, Lochabständen von 2 bis 20 mm und Lochflächenanteilen von 5 bis 30 % bewährt.

Gegenüber dem Stand der Technik (gem. DE 4243280) können die Druckverluste am Austritt der Rohrleitung deutlich reduziert werden. Bei der Ausführung als Doppelresonator kann eine bei Pfeifenresonatoren bisher nicht bekannte, breitbandige schalldämmende Wirkung erzielt werden.

Im folgenden wird die Erfindung an Hand von Ausführungsbeispielen und Zeichnungen näher beschrieben. Es zeigen
- Fig.1: die Anbringung eines Pfeifenresonators in Form einer Abdeckkappe am Rohrende, wobei die Stirnwand der Abdeckkappe der Austrittsöffnung am Rohrleitungsende gegenübersteht
- Fig. 2: eine alternative Form der Anbringung, wobei die Rohrleitung durch die Stirnwand der Abdeckkappe hindurchgeführt ist
- Fig. 3: eine weitere Variante der Anbringung, bei der sich die Austrittsöffnung der Rohrleitung außerhalb der Abdeckkappe befindet
- Fig. 4- 6: zu den Fig. 1 - 3 analoge Ausführungsformen, bei denen aber sämtliche Wände aus Lochplatten bestehen und
- Fig. 7und 8: zwei Ausführungen, bei denen der Pfeifenresonator am Ende der Rohrleitung als Doppelresonator ausgebildet ist

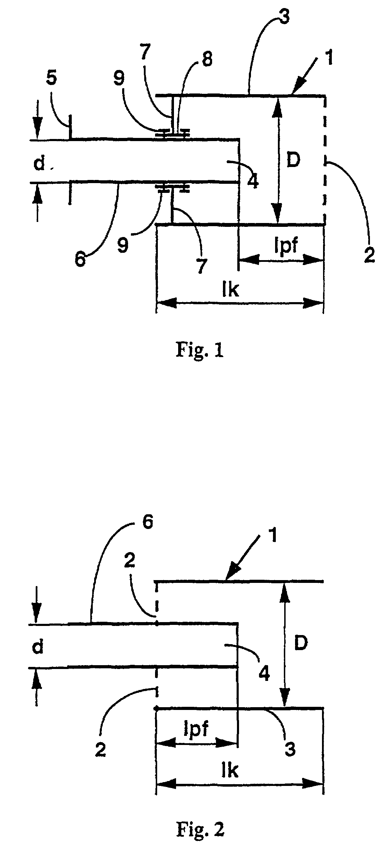

Gemäß Fig. 1 besteht der Pfeifenresonator aus einer einseitig geschlossenen, zylindrischen oder rechteckigen (z.B. kastenförmigen) Abdeckkappe 1 mit einer Stirnwand 2 und einer oder mehreren Seitenwänden 3. Die Abdeckkappe 1 ist mit ihrer Stirnwand 2 gegenüber der Austrittsöffnung 4 einer schallführenden Rohrleitung angebracht. Um eine einfache Montage zu ermöglichen, wird auf den eigentlichen Auslaß der Rohrleitung mittels des Flansches 5 ein kurzes Rohrstück 6 aufgesetzt, an dessen Ende sich die schallabstrahlende Austrittsöffnung 4 befindet. Die Abdeckkappe 1 ist mittels radialer Stege oder Speichen 7 an einer axial verschiebbaren Halterung 8 befestigt. Im einfachsten Fall kann die Abdeckkappe 1 auch direkt am Rohrleitungsende montiert werden. Die Halterung 8 kann mittels der Klemmschrauben 9 am Rohrende oder am Rohrstück 6 fixiert werden.

Auf diese Weise kann der Abstand 1_{pf} zwischen der schallabstrahlenden Austrittsöffnung 4 und der Stirnwand 2 der Abdeckkappe 1 bequem variiert werden. Die Stirnwand 2 der Abdeckkappe 1 besteht hier aus einer Lochplatte, wobei es nicht auf die geometrische Form der Löcher ankommt. Die Löcher können z.B. eine kreisrunde, ovale oder viereckige Form haben. Die Verteilung der Löcher über die Oberfläche der Stirnwand ist in der Regel gleichförmig. Der Durchmesser der Löcher liegt im Bereich von 1 mm bis 5 mm. Wichtig ist nur, daß der Lochflächenanteil 40 % der Gesamtfläche der Stirnwand 2 nicht überschreitet. Anstelle einer Lochplatte kann auch ein verfestigtes Faservlies (Faserplatte) verwendet werden.

Im vorliegenden Fall wird vorausgesetzt, daß die Schallwellen, die sich durch die Rohrleitung fortpflanzen, im Wesentlichen bei einer Frequenz liegen, oder zumindest ein ausgeprägtes Maximum.in einem bestimmten Frequenzbereich besitzen. Manchmal wird aber auch eine ganz bestimmte Frequenz, z.B. ein 1000 Hz-Ton als besonders störend empfunden. Die zu diesen Frequenzen gehörende Schallwellenlänge wird hier definitionsgemäß als "Hauptwellenlänge" bezeichnet. Der Pfeifenresonator ist nur wirksam, wenn er auf diese Wellenlänge abgestimmt ist. Die physikalische Bedingung für die Abstimmung besteht darin, daß der Abstand l_{pf} zwischen der Austrittsöffnung 4 und der Abdeckkappenstirnwand 2 in erster Näherung n ∗ λ/4ist, wobei n eine ungerade Zahl und λ die oben definierte Hauptwellenlänge bedeuten. Wenn die Länge der Abdeckkappe 1 genauer festgelegt werden soll, muß sie um die sog. Mündungskorrektur verkürzt werden (ca. 10 %). In der Praxis erfolgt die Auslegung und Abstimmung in der Weise, daß aus einem lagerhaltigen Satz von Abdeckkappen mit abgestufter Länge ein Exemplar mit ausreichender Länge ausgewählt, mittels der Halterung 7 montiert und solange längs des Rohrstückes 6 verschoben wird, bis die im Umfeld des Auslasses noch hörbare Restschallintensität der störenden Frequenz auf ein Minimum reduziert ist. Diese Einstellung kann erfahrungsgemäß auch durch weniger gut geschultes Service-Personal erfolgen.

Bei der Ausführung gemäß Fig. 2 ist das Rohrstück 6 durch die mit Löchern versehene Stirnwand 2 der Abdeckkappe 1 hindurchgeführt und ragt um das Stück l_{pf} in die Abdeckkappe 1 hinein. In diesem Fall befindet sich die Austrittsöffnung 4 am Rohrleitungsstück 6 gegenüber dem offenen Ende der Abdeckkappe 1. Der Resonator ist abgestimmt (analog zur Ausführung nach Fig. 1), wenn der Abstand zwischen der Austrittsöffnung 4 und der Stirnwand 2 n ∗ λ/4 ist (mit n = 1,3,5,7...).

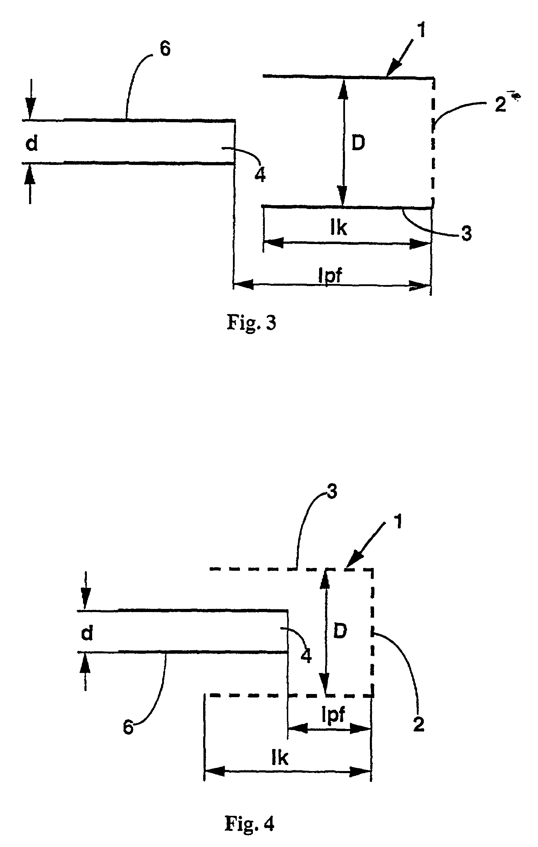

Eine weitere Ausführungsform ist in Figur 3 dargestellt. Im Gegensatz zu Fig. 1 befindet sich hier die Austrittsöffnung 4 des Rohrstücks 6 außerhalb der Abdeckkappe 1. Die Befestigung an der längs des Rohrstücks 6 verschiebbaren Halterung 8 erfolgt wieder durch Stege 7 bzw. Traversen, die einerseits an der Abdeckkappe 1 angeschweißt und andererseits an der Halterung 8 mittels Schrauben 9 fixiert sind (analog zu Fig. 1). Für die Abstimmung ist wieder die Bedingung l_{pf} = n ∗ λ/4 maßgebend.

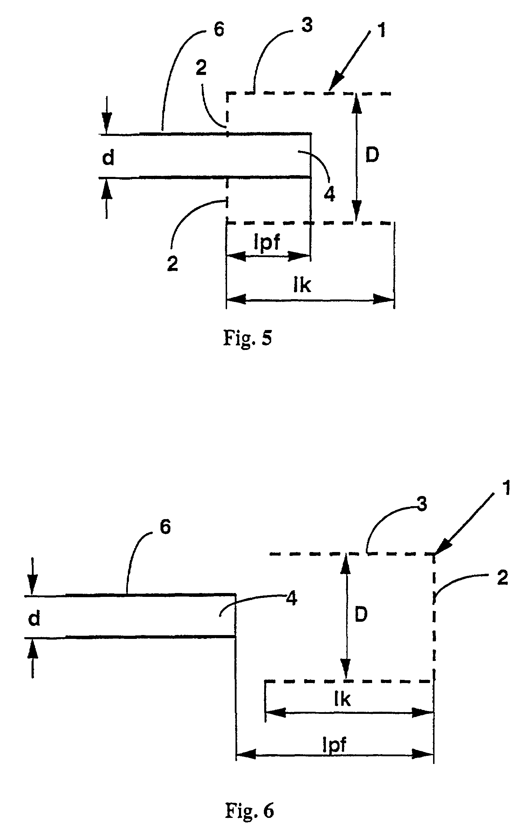

Bei den Ausführungen nach Fig. 4 - 6 sind die Abdeckkappen 1 in der gleichen Weise angeordnet wie bei den zuvor beschriebenen Ausführungen nach Fig. 1 - 3. Im Gegensatz zu Fig. 1 - 3 besteht aber nicht nur die Stirnwand 2 aus einem Lochblech sondern auch die Seitenwand 3 oder im Falle einer kastenförmigen Abdeckkappe alle Seitenwände (3). Diese Ausführungen sind hinsichtlich des Druckverlusts besonders günstig. Bei allen Figuren wird mit lₖ die Länge bzw. Höhe der Abdeckkappe 1 bezeichnet.

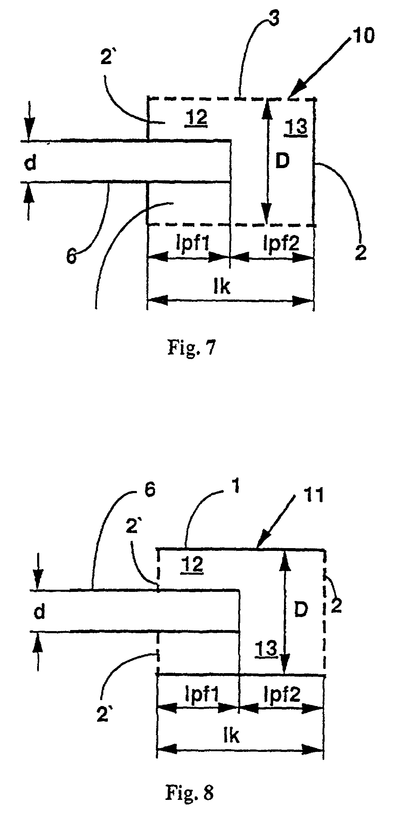

Bei den Ausführungen nach Fig. 7 und 8 sind die Abdeckkappen 1 als Doppelresonatoren ausgebildet. Im Gegensatz zu den bisher beschriebenen Ausführungen sind hier die Abdeckkappen 10 und 11 nicht mehr einseitig offen, sondern sind, abgesehen von den als Lochblechen ausgebildeten Wänden, als geschlossene Kammern mit zwei Stirnwänden 2 und 2' und der Seitenwand 3 (im Falle einer kastenförmigen Ausführung der Abdeckkappe auch mehrere Seitenwände !) ausgeführt. Dabei bildet der Resonanzraum 12 mit der Länge l_{pf1} den ersten und der Resonanraum 13 mit der Länge l_{pf2} den zweiten Teilresonator. Bei der Ausführung nach Fig. 7 besteht nur die Seitenwand 3 (bzw. mehrere Seitenwände) der Abdeckkappe 10 aus einem Lochblech. Dagegen bestehen bei der Ausführung nach Fig. 8 nur die Stirnwände 2 und 2' der Abdeckkappe 11 aus Lochblechen. Beide Varianten bieten den Vorteil, daß durch geeignete Wahl der Längen l_{pf1} und l_{pf2} zwei Resonanzfrequenzen unabhängig voneinander festgelegt werden können. Die erste Resonanzfrequenz wird in Übereinstimmung mit der oben definierten Hauptfrequenz bzw. Hauptwellenlänge gewählt. Als zweite Resonanzfrequenz wird dann eine Frequenz festgelegt, die in einem Seitenband Δf oberhalb oder unterhalb der Hauptfrequenz liegt. Die Bandbreite Δf soll dabei einen Wert von 20 % der Hauptfrequenz nicht überschreiten. Praktisch bedeutet dies, daß zusätzlich zur Hauptfrequenz f eine danebenliegende Frequenz f+Δf ebenfalls stark gedämmt wird. Auf diese Weise wird also eine besonders wirksame breitbandige Schalldämmung am Ende von Rohrleitungen erzielt.

Bei manchen industriellen Schallquellen treten im Schallspektrum zwei verschiedene Emissionsmaxima auf. In solchen Fällen kann (abweichend zur Festlegung der zweiten Frequenz innerhalb des Seitenbandes von ± 20% ) die zuvor beschriebene Doppelresonator-Abdeckkappe mit ihren Resonanzlängen l_{pf1} und l_{pf2} auf die den beiden Emissionsmaxima entsprechenden Frequenzen abgestimmt werden. Dadurch können beide Frequenzen unabhängig voneinander wirksam gedämmt werden. Aufgrund dieser erweiterten Anpassungsmöglichkeiten lassen sich auch weitere technische Anwendungen für die Erfindung erschließen.

## Patentansprüche

1. Vorrichtung zur Schalldämmung an Rohrleitungen mit einer schallabstrahlenden Austrittsöffnung (4) am Rohrende, bestehend aus einem auf die Hauptwellenlänge λ der Schallquelle abgestimmten Pfeifenresonator in Form einer Abdeckkappe (1,10,11) mit einer oder mehreren Seitenwänden (3) und mindestens einer Stirnwand (2,2'), wobei die Abdeckkappe (1,10,11) mittels einer Halterung (8) am Rohrleitungsende derart befestigt ist, dass der Abstand zwischen der schaliabstrahlenden Austrittsöffnung (4) und der Stirnwand (2,2') ca. λ/4 oder ein ungeradzahliges Vielfaches von λ/4 beträgt, **dadurch gekennzeichnet, dass** mindestens zwei Wände der Abdeckkappe (1,10,11) aus einem gasdurchlässigen Material mit einem längenspezifischen Strömungswiderstand von höchstens 500 kNs/m⁴ bestehen.

2. Vorrichtung zur Schalldämmung an Rohrleitungen mit einer schallabstrahlenden Austrittsöffnung (4) am Rohrende, bestehend aus einem auf die Hauptwellenlänge λ der Schallquelle abgestimmten Pfeifenresonator in Form einer Abdeckkappe (1,10,11) mit einer oder mehreren Seitenwänden (3) und mindestens einer Stirnwand (2,2'), wobei die Abdeckkappe (1,10,11) mittels einer Halterung (8) am Rohrleitungsende derart befestigt ist, dass der Abstand zwischen der schallabstrahlenden Austrittsöffnung (4) und der Stirnwand (2,2') ca. λ/4 oder ein ungeradzahliges Vielfaches von λ/4 beträgt, **dadurch gekennzeichnet, dass** mindestens eine Wand der Abdeckkappe (1,10,11) aus einem gasdurchlässigen Material mit einem längenspezifischen Strömungswiderstand von höchstens 500 kNs/m⁴ besteht und dass die Abdeckkappe (10,11) zwei gegenüberliegende Stirnwände (2,2') aufweist und als Doppelresonator ausgebildet ist, wobei der eine Teilresonator (12) auf die Hauptwellenlänge und der andere Teilresonator (13) auf eine Seitenbandfrequenz abgestimmt ist.

3. Vorrichtung nach Anspruch 1 oder 2 **dadurch gekennzeichnet, dass** der längenspezifische Strömungswiderstand im Bereich von 10 bis 500 kNs/m⁴, vorzugsweise zwischen 50 und 300 kNs/m⁴ liegt.

4. Vorrichtung nach Anspruch 1 - 3, **dadurch gekennzeichnet, dass** die gasdurchlässige Wand aus einer Lochplatte mit einem Lochflächenanteil von maximal 40%, bezogen auf die Gesamtfläche dieser Wand, besteht.

5. Vorrichtung nach Anspruch 4, **dadurch gekennzeichnet, dass** der Lochflächenanteil 5 % bis 30 % beträgt.

6. Vorrichtung nach Anspruch 1 - 3, **dadurch gekennzeichnet, dass** die gasdurchlässige Wand aus einer Faserplatte mit durchgehenden Hohlräumen besteht.

7. Vorrichtung nach Anspruch 1 - 6, **dadurch gekennzeichnet, dass** die gasdurchlässige Stirnwand (2,2') der Abdeckkappe (1) gegenüber der schallabstrahlenden Austrittsöffnung (4) angeordnet ist.

8. Vorrichtung nach Anspruch 1 - 6, **dadurch gekennzeichnet, dass** die Rohrleitung durch die gasdurchlässige Stirnwand (2,2') hindurch in die Abdeckkappe (1) hineinragt.

9. Vorrichtung nach den Ansprüchen 1 und 3 bis 8, **dadurch gekennzeichnet, dass** die Abdeckkappe (10,11) zwei gegenüberliegende Stirnwände (2,2') aufweist und als Doppelresonator ausgebildet ist, wobei der eine Teilresonator (12) auf die Hauptwellenlänge und der andere Teilresonator (13) auf eine Seitenbandfrequenz abgestimmt ist.

10. Vorrichtung nach Anspruch 2 oder 9, **dadurch gekennzeichnet, dass** die Seitenbandfrequenz maximal 20 % neben der zur Hauptwellenlänge λ gehörenden Schallfrequenz liegt.

11. Vorrichtung nach Anspruch 2 oder 9, **dadurch gekennzeichnet, dass** die Seitenbandfrequenz durch ein zweites, im Schallspektrum auftretendes Emissionsmaximum vorgegeben ist

## Claims

1. Device for sound insulation on pipelines, having a sound-emitting exit opening (4) at the end of the pipe, comprising a pipe resonator, tuned to the principal wavelength λ of the sound source, in the form of a cover cap (1, 10, 11) with one or more side walls (3) and at least one end wall (2, 2'), the cover cap (1, 10, 11) being fastened on the end of the pipeline by means of a holder (8) in such a way that the distance between the sound-emitting exit opening (4) and the end wall (2, 2') is approximately λ/4 or an odd multiple of λ/4, **characterized in that** at least two walls of the cover cap (1, 10, 11) consist of a gas-pervious material with a length-specific flow resistance of at most 500 kNs/m⁴.

2. Device for sound insulation on pipelines, having a sound-emitting exit opening (4) at the end of the pipe, comprising a pipe resonator, tuned to the principal wavelength λ of the sound source, in the form of a cover cap (1, 10, 11) with one or more side walls (3) and at least one end wall (2, 2'), the cover cap (1, 10, 11) being fastened on the end of the pipeline by means of a holder (8) in such a way that the distance between the sound-emitting exit opening (4) and the end wall (2, 2') is approximately λ/4 or an odd multiple of λ/4, **characterized in that** at least one wall of the cover cap (1, 10, 11) consists of a gas-pervious material with a length-specific flow resistance of at most 500 kNs/m⁴, and **in that** the cover cap (10, 11) has two opposite end walls (2, 2') and is designed as a double resonator, one component resonator (12) being tuned to the principal wavelength, and the other component resonator (13) being tuned to a sideband frequency.

3. Device according to Claim 1 or 2, **characterized in that** the length-specific flow resistance is in the range from 10 to 500 kNs/m⁴, preferably between 50 and 300 kNs/m⁴.

4. Device according to Claims 1-3, **characterized in that** the gas-pervious wall comprises a perforated plate with a proportion of perforated area of at most 40% with reference to the total area of this wall.

5. Device according to Claim 4, **characterized in that** the proportion of perforated area is 5% to 30%.

6. Device according to Claims 1-3, **characterized in that** the gas-pervious wall comprises a fibre board with uninterrupted cavities.

7. Device according to Claims 1-6, **characterized in that** the gas-pervious end wall (2, 2') of the cover cap (1) is arranged opposite the sound-emitting exit opening (4).

8. Device according to Claims 1-6, **characterized in that** the pipeline projects through the gas-pervious end wall (2, 2') into the cover cap (1).

9. Device according to Claims 1 and 3 to 8, **characterized in that** the cover cap (10, 11) has two opposite end walls (2, 2') and is designed as a double resonator, one component resonator (12) being tuned to the principal wavelength, and the other component resonator (13) being tuned to a sideband frequency.

10. Device according to Claim 2 or 9, **characterized in that** the sideband frequency is situated at most 20% next to the sound frequency belonging to the principal wavelength [lambda].

11. Device according to Claim 2 or 9, **characterized in that** the sideband frequency is prescribed by a second emission maximum occurring in the sound spectrum.

## Revendications

1. Dispositif pour l'amortissement du son sur des tuyauteries présentant une ouverture de sortie (4) émettant un son à l'extrémité du tube, constitué d'un résonateur en sifflet accordé sur la longueur d'onde principale λ de la source de son, sous la forme d'un bonnet de recouvrement (1, 10, 11) doté d'une ou de plusieurs parois latérales (3) et d'au moins une paroi frontale (2, 2'), le bonnet de recouvrement (1, 10, 11) étant fixé à l'extrémité de la tuyauterie au moyen d'un dispositif de maintien (8) de telle sorte que la distance entre l'ouverture de sortie (4) émettant le son et la paroi frontale (2, 2') soit d'environ λ/4 ou un multiple impair de λ/4, **caractérisé en ce qu'**au moins deux parois du bonnet de recouvrement (1, 10, 11) sont constituées d'un matériau perméable au gaz, avec une résistance spécifique à l'écoulement longitudinal d'au plus 500 kNs/m⁴.

2. Dispositif pour l'amortissement du son sur des tuyauteries présentant une ouverture de sortie (4) émettant un son à l'extrémité du tube, constitué d'un résonateur en sifflet accordé sur la longueur d'onde principale λ de la source de son, sous la forme d'un bonnet de recouvrement (1, 10, 11) doté d'une ou de plusieurs parois latérales (3) et d'au moins une paroi frontale (2, 2'), le bonnet de recouvrement (1, 10, 11) étant fixé à l'extrémité de la tuyauterie au moyen d'un dispositif de maintien (8) de telle sorte que la distance entre l'ouverture de sortie (4) émettant le son et la paroi frontale (2, 2') soit d'environ λ/4 ou un multiple impair de λ/4, **caractérisé en ce qu'**au moins une paroi du bonnet de recouvrement (1, 10, 11) est constituée d'un matériau perméable au gaz, avec une résistance spécifique à l'écoulement longitudinal d'au plus 500 kNs/m⁴ et **en ce que** le bonnet de recouvrement (10, 11) présente deux parois frontales (2, 2') opposées et est configuré comme résonateur double, l'un des résonateurs partiels (12) étant accordé sur la longueur d'onde principale et l'autre résonateur partiel (13) sur une fréquence de bande latérale.

3. Dispositif selon la revendication 1 ou 2, **caractérisé en ce que** la résistance spécifique à l'écoulement longitudinal est comprise dans la plage de 10 à 500 kNs/m⁴, de préférence entre 50 et 300 kNs/m⁴.

4. Dispositif selon les revendications 1 à 3, **caractérisé en ce que** la paroi perméable au gaz est constituée d'une plaque perforée dont la surface des trous représente au plus 40 % de la surface totale de cette paroi.

5. Dispositif selon la revendication 4, **caractérisé en ce que** la surface des trous représente de 5 % à 30 %.

6. Dispositif selon les revendications 1 à 3, **caractérisé en ce que** la paroi perméable au gaz est constituée d'une plaque de fibres traversée par des espaces creux.

7. Dispositif selon les revendications 1 à 6, **caractérisé en ce que** la paroi frontale (2, 2') perméable au gaz du bonnet de recouvrement (1) est disposée en face de l'ouverture de sortie (4) émettant le son.

8. Dispositif selon les revendications 1 à 6, **caractérisé en ce que** la tuyauterie déborde dans le bonnet de recouvrement (1) à travers la paroi frontale (2, 2') perméable au gaz.

9. Dispositif selon les revendications 1 et 3 à 8, **caractérisé en ce que** le bonnet de recouvrement (10, 11) présente deux parois frontales (2, 2') opposées et est configuré comme résonateur double, l'un des résonateurs partiels (12) étant accordé sur la longueur d'onde principale et l'autre résonateur partiel (13) sur une fréquence de bande latérale.

10. Dispositif selon les revendications 2 ou 9, **caractérisé en ce que** la fréquence de la bande latérale est située à au plus 20 % à côté de la fréquence du son qui correspond à la longueur d'onde principale λ.

11. Dispositif selon les revendications 2 ou 9, **caractérisé en ce que** la fréquence de la bande latérale est prédéterminée par un deuxième maximum d'émission présent dans le spectre du son.
